# EUROPEAN PATENT APPLICATION

(11) **EP 4 104 718 A1**
(43) Date of publication of application: **21.12.2022**
(21) Application number: 21382533.4
(22) Date of filing: 16.06.2021
(51) Int. Cl.: A47J 31/36

(54) **BREWING UNIT FOR COFFEE MACHINES**

(71) Applicant: SDA FACTORY VITORIA SLU, 01010 Vitoria-Gasteiz (Álava) (ES)
(72) Inventor: ASARTA MARTIN, Eneko, 01010 VITORIA-GASTEIZ (Álava) (ES); ELORZA LAUZURICA, Iñaki, 01010 VITORIA-GASTEIZ (Álava) (ES); LARRAÑAGA CANO, Miguel, Ángel, 01010 VITORIA-GASTEIZ (Álava) (ES)
(74) Representative: Herrero & Asociados, S.L.

(57) **Abstract**

The brewing unit (1) for coffee machines comprises fixing elements (2) for fixing the brewing unit (1), a driving element (4) for driving the fixing elements (2) for the detachment of the brewing unit (1), wherein the driving element (4) is a rotating knob, which is rotatable between a fixing position in which the fixing elements (2) are elastically biased by elastic elements (6), fixing the brewing unit (1) in position, and a detaching position in which the fixing elements (2) are moved against the elastic elements (6), permitting the detachment of the brewing unit (1).

It permits to provide a brewing unit, that is detachable from the rest of the coffee machine, and that permits to guarantee its correct positioning in the coffee machine in a simple way and including the advantage of operating only one element to hold the brewing unit and to actuate the release mechanism.

## Description

The present invention refers to a brewing unit for coffee machines, that is detachable from the rest of the coffee machine.

### Background of the invention

Automatic coffee machines include several units for preparing coffee, one of these units being the brewing unit.

The brewing unit is where the ground coffee is pressed and where it is mixed with hot water, providing the coffee drink.

This brewing unit can be detachable from the rest of the coffee machine for permitting an easier cleaning, but the brewing unit must be placed in the correct position for its use for preventing potential problems.

Usually, these detachable brewing units comprise levers or push buttons that must be driven to remove the brewing unit from the rest of the coffee machine and for placing the brewing unit back in the use position.

These currently known detachable brewing units have two drawbacks: They do not permit to guarantee the correct position of the brewing unit in the coffee machine and the handling is not very convenient since the user has to hold the brewing unit and, at the same time, has to actuate a release mechanism to detach the brewing unit.

### Description of the invention

Therefore, one purpose of the present invention is to provide a brewing unit, that is detachable from the rest of the coffee machine, and that permits to guarantee its correct positioning in the coffee machine in a simple way and, on the other hand, including the advantage of operating only one element to hold the brewing unit and to actuate the release mechanism.

With the brewing unit according to the present invention it is possible to solve said drawbacks, providing other advantages that are described below.

The brewing unit for coffee machines according to the present invention comprises:
- fixing elements for fixing the brewing unit in a cavity of a coffee machine,
- a driving element for driving the fixing elements for the detachment of the brewing unit from the cavity of the coffee machine,
wherein the driving element is a rotating knob, which is rotatable between:
- a fixing position in which the fixing elements are elastically biased by elastic elements, fixing the brewing unit in position, and
- a detaching position in which the fixing elements are moved against the elastic elements, permitting the detachment of the brewing unit from the cavity of the coffee machine.

According to this feature, the detachment of the brewing unit is very simple, just being necessary to rotate the rotating knob. Furthermore, when the brewing unit is placed in position in the cavity of the coffee machine, the fixing elements automatically fix the brewing unit, guaranteeing its correct position.

According to a preferred embodiment, the rotating knob is disk-shaped, and it comprises a grip, such as a peripheral grip formed in a rim.

Advantageously, the fixing elements are protrusions, that are inserted in corresponding housings in the cavity of the coffee machine, and preferably have a beveled end, in particular, its distal end, with respect to the center of the brewing unit.

Furthermore, the brewing unit for coffee machines according to the present invention comprises a guiding hole for guiding the insertion of the brewing unit in the fixing position, into the cavity of the coffee machine. This guiding hole matches with a complementary rotary shaft placed in the cavity of the coffee machine.

### Brief description of the drawings

For a better understanding the above explanation and for the sole purpose of providing an example, some non-limiting drawings are included that schematically depict a practical embodiment.
Figure 1 is a perspective view of the brewing unit according to the present invention in its use position;
Figure 2 is a frontal sectioned view of the brewing unit according to the present invention in a coffee machine; and

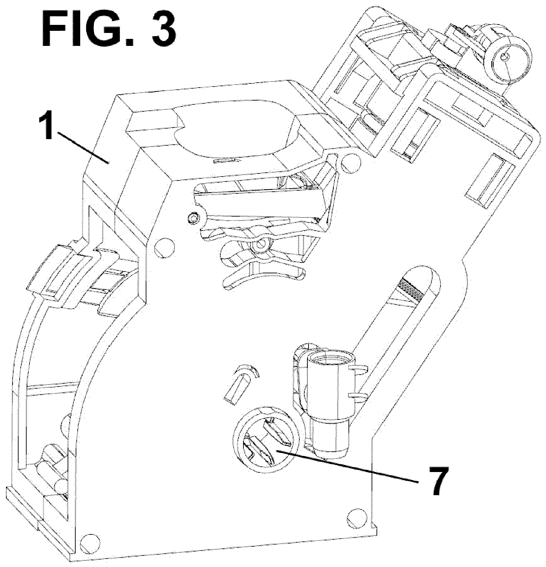

Figure 3 is a rear perspective view of the brewing unit according to the present invention.

### Description of a preferred embodiment

The brewing unit for coffee machines according to the present invention is generally identified with reference number 1. As stated previously, the brewing unit 1 is where the ground coffee is pressed and where it is mixed with hot water, providing the coffee drink.

This brewing unit comprises fixing elements 2 for fixing the brewing unit 1 in a coffee machine, in particular, in a cavity 3 defined in the coffee machine.

These fixing elements 2 are driven by a driving element 4 for the detachment of the brewing unit 1 from the coffee machine, for cleaning operations.

According to the present invention, the driving element 4 is a rotating knob, which is rotatable between two positions.

The first position is a fixing position, in which the fixing elements 2 are elastically biased by elastic elements 6, such as springs, fixing the brewing unit 1 in position in the cavity 3 of the coffee machine. In this position, the fixing elements 2, that are preferably protrusions provided with a beveled end, are biased inside complementary housings 8 made in the walls of the cavity 3 of the coffee machine.

The second position is a detaching position, in which the fixing elements 2 are moved against the elastic elements 6, so that the fixing elements 2 are removed from the housings 8 in the walls of the cavity 3 of the coffee machine, permitting the detachment of the brewing unit 1 from the rest of the coffee machine.

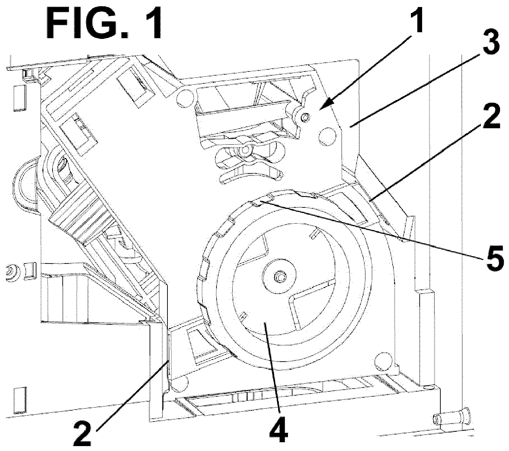

According to a preferred embodiment, the rotating knob 4 is disk-shaped, as shown in Fig. 1, and comprises a grip 5, e.g. a peripheral grip formed by a rim, making its gripping easier for a user.

When the brewing unit 1 according to the present invention is in the fixing position, to detach and remove it from the coffee machine, the user just rotates the rotating knob 4, so that this rotation will make the fixing elements 2 to be moved inwardly with respect to the rotating knob 4, leaving the housings 8 of the cavity 3.

Once rotated the rotating knob 4, the brewing unit 1 can be removed from the coffee machine.

For fixing again the brewing unit 1 in its fixing position, the brewing unit 1 should only be placed in the correct position inside the cavity 3 and it is not necessary to drive the rotating knob 4.

When the brewing unit 1 is inserted in the cavity 3, the fixing elements 2 will contact the walls of the cavity 3 and, thanks to their beveled end, they will be automatically retracted against the action of the elastic elements 6 to permit the insertion of the brewing unit 1.

When the fixing elements 2 are placed in front of the housings 8 of the cavity 3, the elastic elements 6 automatically insert the fixing elements 2 inside the housings 8.

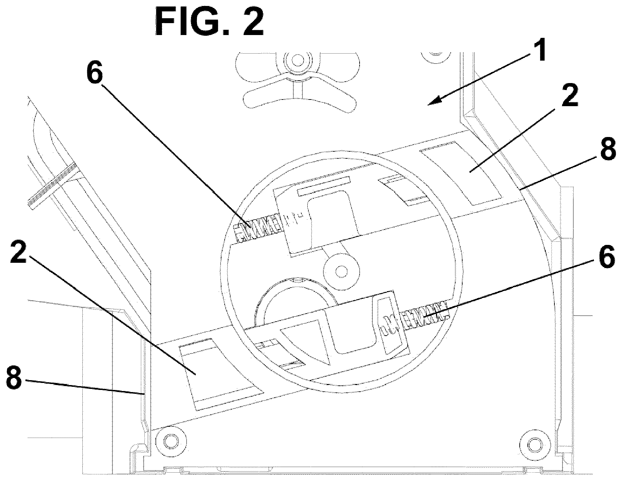

For facilitating the correct position of the brewing unit 1 inside the cavity 3, the brewing unit 1 comprises a guiding hole 7 for guiding the insertion of the brewing unit 1 into the fixing position. This guiding hole 7 matches with a complementary rotary shaft 9 provided in the cavity 3, is shown in Fig. 2.

Even though reference has been made to a specific embodiment of the invention, it is obvious for a person skilled in the art that the brewing unit for coffee machines described herein is susceptible to numerous variations and modifications, and that all of the details mentioned can be substituted for other technically equivalent ones without departing from the scope of protection defined by the attached claims.

## Claims

1. Brewing unit (1) for coffee machines, comprising:
- fixing elements (2) for fixing the brewing unit (1),
- a driving element (4) for driving the fixing elements (2) for the detachment of the brewing unit (1),
**characterized in that** the driving element (4) is a rotating knob, which is rotatable between:
- a fixing position in which the fixing elements (2) are elastically biased by elastic elements (6), fixing the brewing unit (1) in position, and
- a detaching position in which the fixing elements (2) are moved against the elastic elements (6), permitting the detachment of the brewing unit (1).

2. Brewing unit for coffee machines according to claim 1, wherein the rotating knob (4) is disk-shaped.

3. Brewing unit for coffee machines according to claim 1 or 2, wherein the rotating knob (4) comprises a grip (5).

4. Brewing unit for coffee machines according to claim 1, wherein the fixing elements (2) are protrusions.

5. Brewing unit for coffee machines according to claims 1 or 4, wherein the fixing elements (2) have a beveled end.

6. Brewing unit for coffee machines according to anyone of the previous claims, wherein it comprises a guiding hole (7) for guiding the insertion of the brewing unit (1) into the fixing position.
